# EUROPÄISCHE PATENTSCHRIFT

(11) **EP 1 322 015 B1**
(45) Veröffentlichungstag und Bekanntmachung des Hinweises auf die Patenterteilung: **08.03.2006**
(21) Anmeldenummer: 01130599.2
(22) Anmeldetag: 21.12.2001
(51) Int. Cl.: H02G 7/08, F16G 11/06

(54) **Seilklemme**
Cable clamp
Serre câble

(43) Veröffentlichungstag der Anmeldung: 25.06.2003
(73) Patentinhaber: Richard Bergner Elektroarmaturen GmbH & Co.KG, 91126 Schwabach (DE)
(72) Erfinder: Murr, Manfred, 91522 Ansbach (DE)
(74) Vertreter: Tergau & Pohl Patentanwälte

(56) Entgegenhaltungen:
- WO-A-94/26012
- GB-A- 1 587 233
- US-A- 3 288 409

## Beschreibung

Die Erfindung betrifft eine Seilldemme mit zwei Klemmteilen, die zwischen sich einen Klemmraum für ein Seil oder ein Kabel einschließen und an denen jeweils ein Drehgelenkelement einstöckig angeformt ist. Die Seilklemme ist insbesonders für den Einsatz bei einer elektrischen Freileitung vorgesehen.

Eine Seilklemme gemäß dem Oberbegriff des Anspruchs 1 ist aus US 3,288,409 zu entnehmen. Weitere Seilklemmen werden beispielsweise in WO 94/26012 oder GB 1 587 233 beschrieben.

Bei der Freileitung werden dabei für unterschiedliche Funktionen verschiedenen Klemmtypen eingesetzt. So sind beispielsweise Feldabstandhalter für Hochspannungsfreileitungen bekannt, bei denen mittels des Feldabstandhalters zwei Leiter seile der Freileitung voneinander beabstandet gehalten werden. Aus der DE 28 10 695 C2 ist hierzu ein Feldabstandhalter zu entnehmen, der zwei Halterhälften aufweist, die an ihren gegenüberliegenden Enden jeweils eine Halbschale zur Aufnahme des jeweiligen Leiterseils aufweisen. In die durch die Halbschalen gebildeten Aufnahmeräume werden jeweils Einlagen eingelegt, die aus zwei gummielastischen und über ein Filmschamier miteinander verbundene Schalenteile gebildet sind. Zumindest eine der Einlagen liegt dabei fest in den ihr zugeordneten Halbschalen der beiden Halterhälften ein, so dass diese aufgrund des Filmscharniers gelenkig miteinander verbunden sind. Aus der DE 196 19 875 C2 ist ein weiterer Feldabstandhalter zu entnehmen, bei dem zwei Aufnahmeräume für Leiterseile voneinander beabstandet sind. Die Aufnahmeräume werden dabei gebildet durch zwei Klemmschalen, die Ober einen separaten Drehbolzen gelenkig miteinander verbunden sind.

Auf dem Gebiet der Freileitungen sind weiterhin Erdungsklemmen bekannt, die zur Erdung von so genannten Luftkabeln dienen. Derartige Luft- oder Nachrichtenkabel werden üblicherweise zusätzlich zu den normalen Leiterseilen einer Freileitung zwischen den Freileitungsmasten abgespannt. Die Luftkabel sind oftmals als optische Datenübertragungskabel ausgebildet und weisen eine Abschirmung auf. Im Bereich der Freileitungsmasten werden sie üblicherweise geerdet. Hierzu ist die Erdungsklemme vorgesehen. Diese ist üblicherweise gebildet durch eine einfache am Luftkabel befestigte Kabelklemme, die über ein Seilstück mit dem Mast elektrisch leitend verbunden ist. Endseitig am Seilstück ist dabei ein Kabelschuh vorgesehen ist, mit dem das Seilstück an den Mast angeschraubt wird.

Ein weiterer Klemmentyp ist die Dämpferklemme, mit deren Hilfe ein so genannter Schwingungsdämpfer an einem Seil, insbesondere Freileitungsseil, befestigt wird. Der Schwingungsdämpfer ist dabei gebildet durch ein üblicherweise als Dämpfer seil ausgebildetes langgestrecktes Dämpferelement, das etwa mittig von der Dämpferklemme gehalten ist Beidseitig der Dämpferklemme sind am Dämpferelement üblicherweise Dämpfermassen angeordnet Der Schwingungsdämpfer dient allgemein zum Dämpfen von beispielsweise durch Wind verursachte Schwingungen des Seils. Neben der Anordnung an einem Leiterseil einer elektrischen Freileitung können Schwingungsdämpfer auch für Abspann- oder Halteseile von Sendemasten oder Hängebrücken verwendet werden. Ein Schwingungsdämpfer ist beispielsweise in der DE 299 16 513 U1 beschrieben. Bei dem bekannten Schwingungsdämpfer erfolgt die Befestigung am Seil mit Hilfe von Spiralstäben, die um das Seil und um eine Halteschale der Dämpferklemme gewunden wird. Weiterhin ist ein kreisrund geschlossenes Führungs- oder Halterohr vorgesehen, durch das das Dämpferseil geführt ist.

Auf dem Gebiet der Klemmen insbesondere elektrischer Freileitungen wird allgemein eine einfache Montierbarkeit der Klemme vor Ort sowie eine einfache und kostengünstige Ausgestaltung der Klemme angestrebt.

Der Erfindung liegt die Aufgabe zugrunde, eine einfach ausgebildete und montagefreundliche Seilklemme anzugeben.

Die Aufgabe wird gemäß der Erfindung gelöst durch eine Seilklemme mit zwei Klemmteilen, die zwischen sich einen Klemmraum für ein Seil oder auch ein Kabel einschließen. Unter Seilklemme wird also allgemein eine Klemme für ein Seil oder ein Kabel verstanden. An den beiden Klemmteilen ist dabei jeweils ein als Bolzen bzw. Bolzenaufnahme ausgebildetes Drehgelenkelement einstückig angeformt und die beiden Klemmteile sind mit ihren Drehgelenkelementen unter Ausbildung eines Drehgelenks formschlüssig und unverlierbar miteinander verbunden. Die beiden Klemmteile sind daher nach Art eines Scharniers drehbeweglich aneinander angeordnet.

Im Gegensatz zu den lediglich bei den Feldabstandhaltern bekannten Ausbildungen der Klemmen mit Drehgelenkfunktion ist der entscheidende Vorteil der hier beschriebenen neuen Ausbildung darin zu sehen, dass die für die Ausbildung des Drehgelenks notwendigen Elemente vollständig und unmittelbar an den Klemmteilen angeformt sind, also mit diesen eine Baueinheit bilden. Es sind daher lediglich zwei Bauteile für die Ausbildung der Drehgelenkfunktion zwischen den beiden Klemmteilen erforderlich. Dadurch ist die notwendige Teileanzahl und damit der Herstellungsaufwand für die Seilklemme gering gehalten. Gleichzeitig ist durch die drehgelenkartige Verbindung der beiden Klemmteile miteinander eine hohe Montagefreundlichkeit gewährteistet.

Zudem sind die beiden Klemmteile aus einem Strangpressprofil durch einfaches Ablängen gebildet. Bei einem Strangpressprofil lässt sich in besonders einfacher und kostengünstiger Weise die einstückige Ausbildung des Klemmteils zusammen mit dem jeweiligen Drohgelenkelement verwirklichen.

Um eine einfache und sichere Montage zu ermöglichen, sind die beiden Klemmteile weiterhin unverlierbar miteinander verbunden und liegen hierzu formschlüssig ineinander ein. Ein derartiges formschlüssiges Ineinanderliegen lässt sich in sehr einfacher Weise durch das Strangpressprofil mit zueinander korrespondierenden Geometrieformen verwirklichen. Die beiden Drehgelenkelemente sind hierzu beispielsweise ineinander eingeschnappt und in einer bevorzugten Ausgestaltung sind sie in Richtung der Drehgelenkachse ineinander einschiebbar.

Vorteilhafterweise sind zusätzlich zu den Drehgelenkelementen an beiden Klemmteilen Verbindungselemente angeformt, über die die beiden Klemmteile miteinander verbindbar sind. Diese Verbindungselemente sind dabei vorzugsweise an der den Drehgelenkelementen gegenüberliegenden Seite des Klemmraums vorgesehen, so dass dieser also auf der einen Seite von den Drehgelenkelementen und auf der anderen Seite von den beiden Verbindungselementen begrenzt ist und im Montageendzustand der Klemmraum nach Art eines Rings geschlossen ist. Diese Ausgestaltung mit der zusätzlichen Anordnung der Verbindungselemente hat den entscheidenden Vorteil, dass keinerlei zusätzliches Spannelement zum EinMemmen des Seils im Klemmraum notwendig ist. Vielmehr wird das Seil durch das Verbinden der beiden Verbiridungselemente miteinander im Klemmraum eingeklemmt Für die Funktion des Klemmens des Seils sind daher lediglich die beiden Klemmteile als einzige Bauteile notwendig. Zusätzliche Spann- oder Drehgelenkelemente sind nicht erforderlich.

Für eine einfache Verbindbarkeit der beiden Verbindungselemente miteinander sind diese in einer zweckdienlichen Weiterbildung als Rastelemente ausgebildet Diese können auch als Klick- oder Minketemente bezeichnet werden. Dabei besteht die Möglichkeit, mehrere Raststellungen vorzusehen, um auch Seile mit unterschiedlichem Durchmesser im Klemmraum klemmen zu können.

Zusätzlich oder alternativ zu den Verbindungselementen sind die beiden Klemmteile vorzugsweise über ein Spannelement, insbesondere eine Schraube, verspannbar. Die Schraube hat den Vorteil, dass in einfacher Weise unterschiedliche Klemmraumdurchmesser eingestellt und Seile auch unterschiedlicher Seildurchmesser sicher klemmbar sind.

Vorzugsweise ist bei der Seilklemme ein elastischer, insbesondere biegeelastischer Teilbereich vorgesehen, der eine elastische Auslenkung zumindest eines der Klemmteile in eine durch das Drehgelenk definierte Schwenkrichtung ermöglicht. Durch diese elastische Auslenkung ist eine einfache und für die Klemme schonende Montage auch bei einem an den Seildurchmesser möglichst angepassten Klemmraum ermöglicht. Unter elastischer Auslenkbarkeit in Schwenkrichtung ist dabei zu versehen, dass die Krümmung eines durch das jeweilige Klemmteil definierten Schwenkarms veränderbar ist, so dass der Schwenkarm etwas aufgebogen werden kann. Anders ausgedrückt: Zwischen der Lagerung des jeweiligen Klemmteils und einer Klemmschale des Klemmteils ist eine elastische, also keine vollständig steife Verbindung vorgesehen.

Zweckdienlicherweise ist dabei der elastische Teilbereich im Sinne einer möglichst einfachen Ausgestaltung durch eine Querschnittsschwächung gebildet. Dies lässt sich bei einem Strangpressprofil in besonders einfacher Weise venarirklichen. Hierzu ist beispielsweise vorgesehen, dass der Drehbolzen durch einen vergleichsweise dünnen Verbindungssteg mit dem restlichen Klemmteil verbunden ist. Das Klemmteil weist also zum Drehbolzen hin eine Einschnürung auf. Weiterhin ist die Bolzenaufnahme zusätzlich oder alternativ nicht vollständig im Klemmteil eingebettet, sondem ist an diesem freiendseitig, insbesondere nach Art einer Aufnahmeschale mit dünnen Schalenwänden ausgebildet. Zweckdienlicherweise sind die beiden Drehgelenkelemente zur Ausbildung des elastischen Teilbereichs hakenartig ausgeformt und miteinander verhakt. Die Elastizität ist hierbei gegeben durch ein elastisches Aufbiegen des jeweiligen Hakenbogens.

Eine derartige Seilklemme eignet sich in besonderer Weise für den Einsatz als Dämpferklemme. Hierzu weist zumindest eines der Klemmteile eine Aufnahme für ein Dämpferelement auf. Diese Aufnahme ist dabei vorzugsweise durch einen seitlich offenen Haltekanal ausgebildet. Durch die seitlich offene Ausgestaltung besteht die Möglichkeit, das insbesondere als Dämpferseil ausgebildete Dämpferelement eines Schwingungsdämpfers in radialer Richtung, also seitlich zur Längsrichtung des Dämpferseils, einzulegen. In einer bevorzugten Variante ist der Haltekanal dabei derart ausgestaltet, dass er nach eingelegtem Dämpferseil verquetschbar ist, so dass das Dämpferseil durch ein Verquetschen des Haltekanals sicher in diesem geklemmt ist.

In einer vorteilhaften Alternative ist der Haltekanal durch ein rastbares Verschlusselement verschließbar. Dieses ist dabei entweder als eigenständiges Verschlusselement ausgeführt oder vorzugsweise am zweiten Klemmteil angeformt. Das Verschlusselement kann in der letztgenannten Ausführungsvariante mit der Anformung des Haltekanals am zweiten Klemmteil durch das Verbindungselement gebildet sein.

Bevorzugt ist die Seilklemme alternativ als eine Erdungsklemme ausgebildet und weist ein Befestigungselement zur Befestigung an einem Mast, insbesondere Freileitungsmast auf. Das Befestigungselement ist dabei insbesondere als ein Haltefuß für eine formschlüssige Verbindung, beispielsweise nach Art eines Schwalbenschwanzes ausgeformt.

Ausführungsbeispiele der Erfindung werden im Folgenden anhand der Zeichnung näher erläutert. Es zeigen jeweils in schematischen Seitendarstellungen:
- Fig. 1 bis 4: Dämpferklemmen in unterschiedlichen Ausführungsvarianten, bei denen zwei schwenkbeweglich aneinander gelagerte Klemmteile über eine Spannschraube miteinander verspannbar sind,
- Fig. 5 bis 7: ausschnittsweise Darstellungen von Dämpferklemmen im Bereich eines Klemmraums für ein Leiterseil einer Freileitung, wobei nach den Fig. 6 und 7 zusätzlich zu der gelenkigen Verbindung der beiden Klemmteile Rastelemente zur Ausbildung eines in etwa kreisrund geschlossenen Klemmraums vorgesehen sind,
- Fig. 8 bis 10: ausschnittsweise Darstellungen von Dämpferklemmen im Bereich der Aufnahme für ein Dämpferelement, wobei die Aufnahme gebildet ist durch einen seitlich offenen Haltekanal sowie durch ein mit diesem verrasteten Verschlusselement, und
- Fig. 11: eine Erdungsklemme.

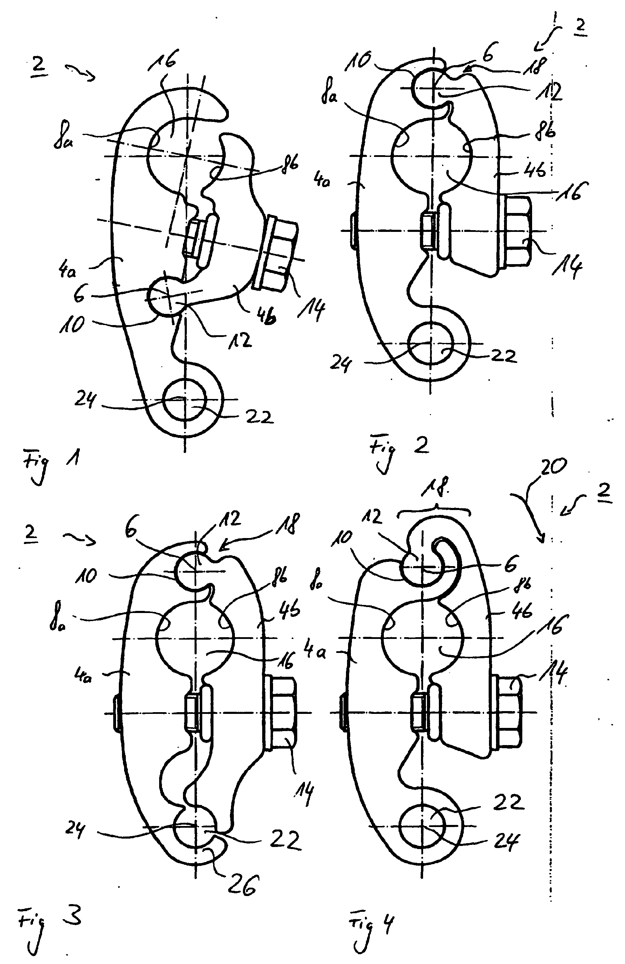

Gemäß den Ausführungsbeispielen der Fig. 1 bis 4 umfasst eine Dämpferklemme 2 ein erstes und ein zweites Klemmteil 4a,4b, die aneinander um eine Drehachse 6 drehbar gelagert sind. Die beiden Klemmteile 4a,4b weisen dabei jeweils eine Klemmschale 8a,8b sowie jeweils ein Drehgelenkelement auf. Im Falle des ersten Klemmteils 4a ist dieses gebildet durch eine Bolzenaufnahme 10 und im Falle des zweiten Klemmteils 4b durch einen Drehbolzen 12, der in der Bolzenaufnahme 10 formschlüssig und verliersicher einliegt. Die Bolzenaufnahme 10 umgreift hierbei den Drehbolzen 12 zangen- oder klauenartig.

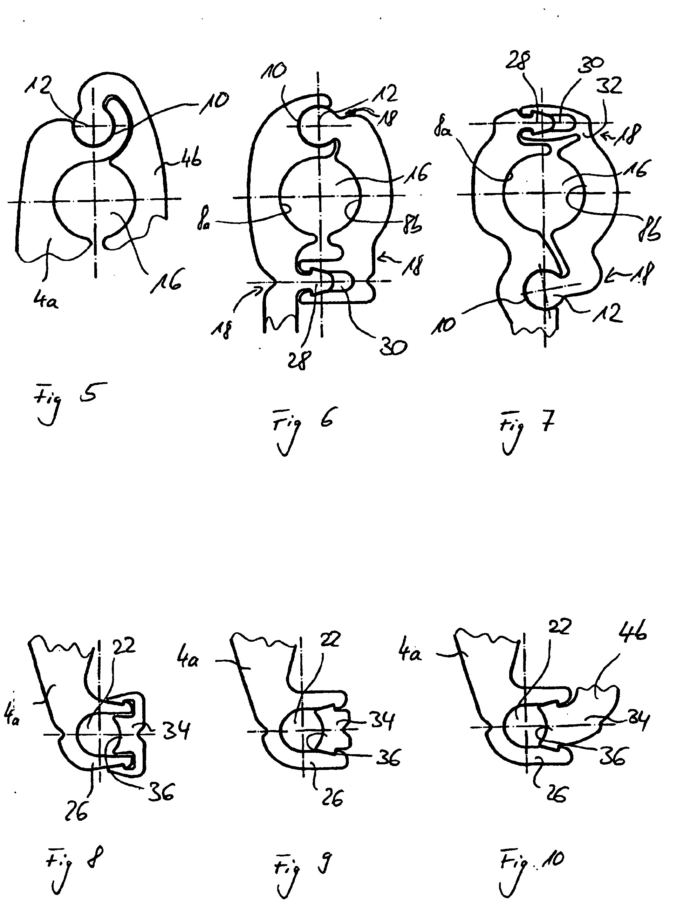

Die beiden Klemmteile 4a,4b sind aus einem Aluminium-Strangpressprofil ausgebildet. Beim Zusammenfügen der beiden Klemmteile 4a,4b wird der Drehbolzen 12 vorzugsweise in Richtung der Drehachse 6 in die Bolzenaufnahme 10 eingeschoben. Alternativ kann auch vorgesehen sein, dass der Drehbolzen 12 in die Bolzenaufnahme 10 einschnappt. Hierzu ist erforderlich, dass die Bolzenaufnahme 10 elastisch aufgebogen werden kann. Diese Möglichkeit kann insbesondere bei den Ausführungsformen gemäß den Fig. 2 und 3 vorgesehen sein, bei denen die Bolzenaufnahme 10 durch eine endseitig am ersten Klemmteil 4a angeordnete Schale oder Wanne mit dünnen und elastisch abbiegbaren Randstegen ausgebildet sein kann. Die beiden Klemmteile 4a, 4b sind jeweils über eine Spannschraube 14 miteinander verspannbar.

Bei der Montage vor Ort wird zunächst ein zu klemmendes Seil, insbesondere ein Leiterseil einer Freileitung, in den durch die Klemmschale 8a definierten Aufnahmeraum eingelegt. Anschließend wird das zweite Klemmteil 4b mit der Klemmschale 8b um die Drehachse 6 in Richtung zu der ersten Klemmschale 8a verschwenkt. Dadurch wird zwischen den beiden Klemmschalen 8a,8b ein Klemmraum 16 gebildet, in dem das Seil einliegt.

Anschließend wird die Spannschraube 14 eingefügt und angezogen, so dass das Seil sicher im Klemmraum 16 geklemmt ist.

Bei der Ausführungsvariante der Fig. 1 ist der Klemmraum 16 nicht vollständig geschlossen. Die Spannschraube 14 und das vom Drehbolzen 12 und der Spannschraube 14 gebildete Drehgelenk sind dabei auf der gleichen Seite des Klemmraums 16 angeordnet. In dieser Ausgestaltung besteht die Möglichkeit, dass die beiden Klemmteile 4a,4b starr und unelastisch ausgebildet sind. Demgegenüber sind bei den Ausführungsvarianten der Fig. 2 bis 4 das Drehgelenk und die Spannschraube 14 beiderseits des Klemmraums 16 angeordnet, so dass ein insgesamt geschlossener und insbesondere kreisrunder Klemmraum 16 ausgebildet ist.

Da die beiden Klemmteile 4a, 4b bei einliegendem Seil gegeneinander verschwenkt werden, ist ein elastischer Teilbereich 18 vorgesehen, der ein elastisches Aufbiegen insbesondere des zweiten Klemmteils 4b ermöglicht. Dies erleichtert die Montage, hält die Belastung des zweiten Klemmteils 4b gering und ermöglicht ein passgenaues allseitiges Umschließen des Seils im Klemmraum 16. Der elastische Teilbereich 18 ist dabei jeweils im Bereich des Drehgelenks gebildet. Bei den Ausführungsvarianten der Fig. 2 und 3 ist dies durch eine Einschnürung zwischen der Klemmschale 8b und dem Drehbolzen 12 verwirklicht. In diesem Bereich weist das Klemmteil 4b also eine Querschnittsverjüngung im Vergleich zu seinem restlichen Bereich auf, so dass im Teilbereich 18 eine verringerte Steifigkeit vorliegt. Beim Ausführungsbeispiel der Fig. 4 sind die beiden Klemmteile 4a,4b im Bereich der Bolzenaufnahme 10 bzw. des Drehbolzens 12 jeweils nach Art eines Hakens ausgebildet, die ineinander verhakt sind. Daher ist durch den Drehbolzen 12 mit dem sich an diesen anschließenden Teilstück ein Hakenbogen ausgebildet. Gleichermaßen ist durch die Bolzenaufnahme 10 ein Hakenbogen definiert. Beide Hakenbögen weisen eine gewisse Elastizität auf, so dass sie bei einem Verschwenken in die durch einen Pfeil angedeutet Schwenkrichtung 20 um die Drehachse 6 aufgebogen und somit elastisch verformt werden können.

Bei den Ausführungsbeispielen der Fig. 1, 2 und 4 weist das erste Klemmteil 4a an seiner der Klemmschale 8a gegenüberliegenden Endseite eine geschlossene nach Art eines Halterohres ausgebildete Aufnahme 22 für ein insbesondere als Dämpferseil ausgebildetes Dämpferelement eines nicht dargestellten Schwingungsdämpfers auf. Aufgrund der rohrförmigen Ausgestaltung muss bei der Montage das Dämpferseil in Längsrichtung 24 durch die Aufnahme 22 hindurchgeführt werden. In der Ausgestaltung nach Fig. 3 ist endseitig am Klemmteil 4a ein offener Haltekanal 26 ausgebildet, der es ermöglicht, dass das Dämpferseil radial, also senkrecht zur Längsrichtung 24, in die vom Haltekanal 26 definierte Aufnahme eingelegt werden kann. Das Dämpferseil wird in diesem Fall in der Aufnahme 22 über das zweite Klemmteil 4b eingeklemmt, welches endseitig nach Art einer Klemmpfanne ausgebildet ist. Das Klemmen sowohl des Leiterseils im Klemmraum 16 als auch des Dämpferseils in der Aufnahme 22 erfolgt in dieser Ausführungsform gleichzeitig durch die Spannschraube 14.

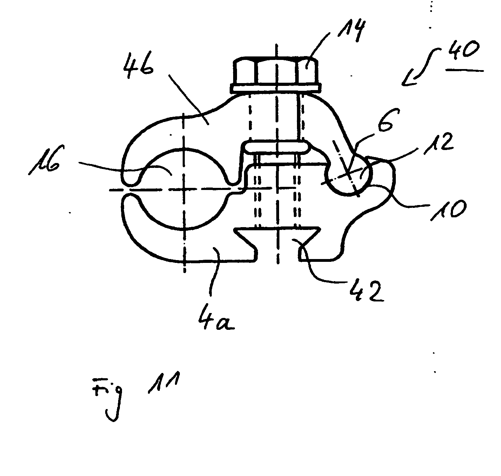

Gemäß den Ausführungsbeispielen der Fig. 6 und 7 ist zusätzlich zu der Drehgelenkverbindung eine Rast- oder Klickverbindung zwischen den beiden Klemmteilen 4a,4b vorgesehen. Die in Fig. 5 nur ausschnittsweise dargestellte Drehgelenkverbindung entspricht der zur Fig. 4 beschriebenen Drehgelenkverbindung und kann ebenfalls mit der in den Fig. 6 und 7 dargestellten Rastverbindung jeweils kombiniert werden.

Die Rastverbindung ist gebildet durch einen Rastzapfen am ersten Klemmteil 4a und einer Rastausnehmung 30 am zweiten Klemmteil 4b, die durch zwei seitliche Raststege begrenzt ist, die sich elastisch nach außen aufbiegen lassen. Im montierten Endzustand hintergreift die Rastausnehmung 30 mit Rastnasen den Rastzapfen 28 nach Art eines Hinterschnitts. Der Rastzapfen 28 ist in der Rastausnehmung 30 eingeschnappt. Die Rastelemente 28, 30 sind auf der dem Drehgelenk gegenüberliegenden Seite des Klemmraums 16 angeordnet. Das die Rastausnehmung 30 aufweisende Teilstück des zweiten Klemmteils 4b ist im Querschnitt gesehen U-förmig ausgebildet und mit der Klemmschale 8b nur über einen dünnen Verbindungssteg 32 verbunden. Im Bereich des Verbindungsstegs 32 ist also das Klemmteil 4b eingeschnürt und weist eine Querschnittsreduzierung auf, so dass in diesem Bereich der elastische Teilbereich 18 vorliegt. Zusätzlich kann auch im Bereich des Drehgelenks die Dämpferklemme 2 mit einem elastischen. Teilbereich 18 versehen sein.

Prinzipiell besteht auch die Möglichkeit, dass anstelle der Drehgelenkverbindung die Verbindung der beiden Klemmteile 4a,4b beiderseits des Klemmraums 16a über eine Rastverbindung erfolgt, wie sie beispielsweise in den Fig. 6 und 7 auf nur einer Seite des Klemmraums 16 dargestellt ist.

Gemäß den Ausführungsvarianten der Fig. 8 bis 10 ist der am ersten Klemmteil 4a endseitig ausgebildete Haltekanal 26 mit der Aufnahme 22 für das Dämpferseil über ein eigenes Verschlusselement 34 verschlossen. Das Verschtusselement 34 ist dabei mit dem Haltekanal 26 verrastet. Das Verschlusselement 34 weist hierzu jeweils einen in die Aufnahme 22 eingreifenden halbschalenartigen Stempel 36 auf. Bei den Varianten nach den Fig. 9 und 10 ist dieser Stempel 36 unmittelbar im Innenraum des Haltekanals 26 mit diesem verrastet. Bei der Ausführungsvariante nach Fig. 8 erfolgt die Verrastung außenseitig am Haltekanal 26. Bei den Ausführungsbeispielen nach den Fig. 9 und 10 ist jeweils ein separates Verschlusselement 34 vorgesehen, wohingegen das Verschlusselement 34 Teil des zweiten Klemmteils 4b ist und zum Stempel 36 hin abgebogen ist. Der in der Fig. 10 dargestellte untere Bereich der Dämpferklemme 2 kann mit einem oberen Bereich der Dämpferklemme 2 kombiniert werden, wie er beispielsweise in Fig. 5 dargestellt ist. Auch ist eine Kombination mit dem oberen Bereich nach Fig. 6 möglich, wobei die in Fig. 6 dargestellte Rastverbindung bestehend aus Rastzapfen 28 und Rastausnehmung 30 entfallen kann. Bei der letztgenannten Kombination sind die beiden Klemmteile 4a,4b also lediglich am Drehgelenk und im Bereich der Aufnahme 22 mit dem Verschlusselement 34 miteinander verbunden. In dieser Ausführungsform sind nur die jeweils einstückig ausgebildeten beiden Klemmteile 4a,4b erforderlich, um sowohl das Leiterseil im Klemmraum 16 als auch das Dämpferseil in der Aufnahme 22 zu klemmen.

Das Prinzip der drehgelenkartigen Verbindung der beiden Klemmteile 4a,4b miteinander ist vorzugsweise auch für eine Erdungsklemme 40 vorgesehen, wie sie in Fig. 11 dargestellt ist. Das erste Klemmteil 4a dieser Erdungsklemme 40 weist an ihrer dem Klemmraum 16 abgewandten Unterseite eine SchwalbenschwanzAusnehmung 42. Diese dient zur unmittelbaren und direkten formschlüssigen Befestigung an einem korrespondierenden Gegenstück an einem Freileitungsmast. Zwischen Mast und Erdungsklemme lässt sich also ein Formschluss durch ein gegenseitiges Verschieben in Richtung der Drehachse 6 (Richtung senkrecht zur Papierebene) verwirklichen. Hierzu ist jede Form geeignet, die einen Hintergriff zwischen Erdungsklemme 40 und korrespondierendem Gegenteil am Mast ermöglicht.

Das in den Figuren beschriebene Prinzip der drehgelenkartigen Verbindung der beiden Klemmteile sowie das Prinzip der Verrastung der beiden Klemmteile miteinander ist besonders geeignet für Dämpferklemmen 2, wie sie beispielhaft in den Fig. 1 bis 10 dargestellt sind. Diese Prinzipien sind auch geeignet für die Anwendung bei Erdungsklemmen 40, wie sie beispielhaft in Fig. 11 dargestellt ist. Daneben lassen sich diese Prinzipien auch bei Seilklemmen allgemeiner Art anwenden, wie sie beispielsweise bei Feldabstandshaltern verwendet werden.

Die Seilklemme kann auch allgemein als eine Stromklemme zur elektrischen Kontaktierung von stromführenden Leitern verwendet werden.

### Bezugszeichenliste

- 2: Dämpferklemme
- 4a,4b: Klemmteil
- 6: Drehachse
- 8a,8b: Klemmschale
- 10: Bolzenaufnahme
- 12: Drehbolzen
- 14: Spannschraube
- 16: Klemmraum
- 18: elastischer Teilbereich
- 20: Schwenkrichtung
- 22: Aufnahme
- 24: Längsrichtung
- 26: Haltekanal
- 28: Rastzapfen
- 30: Rastausnehmung
- 32: Verbindungssteg
- 34: Verschlusselement
- 36: Stempel
- 40: Erdungsklemme
- 42: Schwalbenschwanzausnehmung

## Patentansprüche

1. Seilklemme (2,40) insbesondere für eine elektrische Freileitung, mit zwei Klemmteilen (4a,4b), die zwischen sich einen Klemmraum (16) für ein Seil einschließen, wobei an den beiden Klemmteilen (4a,4b) jeweils ein Drehgelenkelement (10,12) einstückig angeformt ist, das am ersten Klemmteil (4a) eine Bolzenaufnahme (10) und am zweiten Klemmteil (4b) ein Drehbolzen (12) ist,
**dadurch gekennzeichnet,**
**dass** die beiden Klemmteile (4a,4b) aus einem Strangpressprofil gebildet sind, und dass die Bolzenaufnahme (10) und der Drehbolzen (12) zur Ausbildung eines Drehgelenks unverlierbar miteinander verbunden sind und hierzu formschlüssig und spielfrei ineinander einliegen.

2. Seilklemme (2,40) nach Anspruch 1,
**dadurch gekennzeichnet,**
**dass** die beiden Drehgelenkelemente (10,12) in Richtung der Drehachse (6) des Drehgelenks ineinander einschiebbar sind.

3. Seilklemme (2,40) nach einem der vorhergehenden Ansprüche,
**dadurch gekennzeichnet,**
**dass** an den beiden Klemmteilen (4a,4b) Verbindungselemente (28,30) angeformt sind, Ober die sie miteinander verbindbar sind.

4. Seilklemme (2,40) nach Anspruch 3,
**dadurch gekennzeichnet,**
**dass** die Verbindungselemente als Rastelemente (28,30) ausgebildet sind.

5. Seilklemme (2,40) nach einem der vorhergehenden Ansprüche,
**dadurch gekennzeichnet,**
**dass** ein elastischer Teilbereich (18) vorgesehen ist, der eine elastische Auslenkung zumindest eines der Klemmteile (4a,4b) in eine durch das Drehgelenk definierte Schwenkrichtung (20) ermöglicht.

6. Seilklemme (2,40) nach Anspruch 5,
**dadurch gekennzeichnet,**
**dass** der elastischen Teilbereich (18) durch eine Querschnittsschwächung gebildet ist.

7. Seilklemme (2,40) nach Anspruch 5 oder 6,
**dadurch gekennzeichnet,**
**dass** die beiden Klemmteile (4a,4b) im Bereich der beiden Drehgelenkelemente (10,12) jeweils hakenartig ausgebildet und miteinander verhakt sind.

8. Seilklemme nach einem der vorhergehenden Ansprüche,
**dadurch gekennzeichnet,**
**dass** sie als Dämpferklemme (2) ausgebildet ist und zumindest eines der Klemmteile (4a) eine Aufnahme (22) für ein Dämpferelement aufweist.

9. Seilklemme (2) nach Anspruch 8,
**dadurch gekennzeichnet,**
**dass** die Aufnahme (22) zumindest teilweise gebildet ist durch einen seitlich offenen Haltekanal (26).

10. Seilklemme (2) nach Anspruch 9,
**dadurch gekennzeichnet,**
**dass** der offene Haltekanal (26) durch ein rastbares Verschtusselement (34) verschließbar ist.

11. Seilklemme nach einem der Ansprüche 1 bis 7,
**dadurch gekennzeichnet,**
**dass** sie als eine Erdungsklemme (40) ausgebildet ist und ein Befestigungselement (42) zur Befestigung an einem Mast aufweist.

12. Seilklemme (40) nach Anspruch 11,
**dadurch gekennzeichnet,**
**dass** das Befestigungselement (42) als ein Haltefuß für eine formschlüssige Verbindung, insbesondere nach Art eines Schwalbenschwanzes, ausgebildet ist.

## Claims

1. Cable clamp (2, 40), in particular for an overhead electrical line, having two clamping parts (4a, 4b), which between them enclose a clamping area (16) for a cable, in each case a rotary joint element (10, 12) being integrally formed on the two clamping parts (4a, 4b), said rotary joint element (10, 12) being a bolt receptacle (10) on the first clamping part (4a) and a pivot bolt (12) on the second clamping part (4b), **characterized in that** the two clamping parts (4a, 4b) are formed from an extruded profile, and **in that** the bolt receptacle (10) and the pivot bolt (12) are connected to one another in an undetachable manner so as to form a rotary joint and, for this purpose, are inserted one inside the other in an interlocking manner without play.

2. Cable clamp (2, 40) according to Claim 1, **characterized in that** the two rotary joint elements (10, 12) can be pushed one inside the other in the direction of the axis of rotation (6) of the rotary joint.

3. Cable clamp (2, 40) according to one of the preceding claims, **characterized in that** connecting elements (28, 30) are integrally formed on the two clamping parts (4a, 4b) and can be used to connect the two clamping parts (4a, 4b) to one another.

4. Cable clamp (2, 40) according to Claim 3, **characterized in that** the connecting elements are in the form of latching elements (28, 30).

5. Cable clamp (2, 40) according to one of the preceding claims, **characterized in that** an elastic subregion (18) is provided which makes it possible for at least one of the clamping parts (4a, 4b) to be deflected elastically in a pivoting direction (20) defined by the rotary joint.

6. Cable clamp (2, 40) according to Claim 5, **characterized in that** the elastic subregion (18) is formed by a weakening in cross section.

7. Cable clamp (2, 40) according to Claim 5 or 6, **characterized in that** the two clamping parts (4a, 4b) are each in the form of hooks in the region of the two rotary joint elements (10, 12) and are hooked to one another.

8. Cable clamp according to one of the preceding claims, **characterized in that** it is in the form of a damper clamp (2), and at least one of the clamping parts (4a) has a receptacle (22) for a damper element.

9. Cable clamp (2) according to Claim 8, **characterized in that** the receptacle (22) is at least partially formed by a laterally open holding channel (26).

10. Cable clamp (2) according to Claim 9, **characterized in that** the open holding channel (26) can be closed by a closure element (34) which can be latched.

11. Cable clamp according to one of Claims 1 to 7, **characterized in that** it is in the form of an earthing clamp (40) and has a fixing element (42) for the purpose of fixing it to a mast.

12. Cable clamp (40) according to Claim 11, **characterized in that** the fixing element (42) is in the form of a holding foot for an interlocking connection, in particular in the form of a dovetail connection.

## Revendications

1. Serre-câble (2, 40) en particulier pour une ligne électrique aérienne, comportant deux parties de serrage (4a, 4b) qui enferment entre elles un espace de serrage (16) pour un câble, un élément d'articulation en rotation respectif (10, 12) étant conformé d'un seul tenant sur les deux parties de serrage (4a, 4b), élément qui est un logement à goujon (10) sur la première partie de serrage (4a) et un goujon rotatif (12) sur la deuxième partie de serrage (4b),
**caractérisé en ce que**
les deux parties de serrage (4a, 4b) sont formées par un profil extrudé et **en ce que** le logement à goujon (10) et le goujon rotatif (12) sont reliés de façon imperdable l'un à l'autre pour réaliser une articulation en rotation et qu'ils s'emboîtent à cet effet l'un dans l'autre par coopération de formes et sans jeu.

2. Serre-câble (2, 40) selon la revendication 1,
**caractérisé en ce que**
les deux éléments d'articulation en rotation (10, 12) sont susceptibles d'être emboîtés l'un dans l'autre en direction de l'axe de rotation (6) de l'articulation en rotation.

3. Serre-câble (2, 40) selon l'une des revendications précédentes,
**caractérisé en ce que**
des éléments de liaison (28, 30) sont conformés sur les deux parties de serrage (4a, 4b), par lesquels elles sont susceptibles d'être reliées l'une à l'autre.

4. Serre-câble (2, 40) selon la revendication 3,
**caractérisé en ce que**
les éléments de liaison sont réalisés sous forme d'éléments à enclenchement (28, 30).

5. Serre-câble (2, 40) selon l'une des revendications précédentes,
**caractérisé en ce que**
il est prévu une zone partielle élastique (18) qui permet une déviation élastique de l'une au moins des parties de serrage (4a, 4b) dans une direction de pivotement (20) définie par l'articulation en rotation.

6. Serre-câble (2, 40) selon la revendication 5,
**caractérisé en ce que**
la zone partielle élastique (18) est formée par un affaiblissement de la section transversale.

7. Serre-câble (2, 40) selon l'une ou l'autre des revendications 5 et 6,
**caractérisé en ce que**
dans la zone des deux éléments d'articulation en rotation (10, 12), les deux parties de serrage (4a, 4b) sont réalisées chacune à la manière d'un crochet et sont accrochées l'une avec l'autre.

8. Serre-câble selon l'une des revendications précédentes,
**caractérisé en ce que**
il est réalisé sous forme de serre-câble à amortissement (2) et **en ce que** l'une au moins des parties de serrage (4a) présente un logement (22) pour un élément d'amortissement.

9. Serre-câble (2) selon la revendication 8,
**caractérisé en ce que**
le logement (22) est formé au moins partiellement par un canal de maintien (26) ouvert latéralement.

10. Serre-câble (2) selon la revendication 9,
**caractérisé en ce que**
le canal de maintien (26) ouvert est refermable par un élément de fermeture à enclenchement (34).

11. Serre-câble selon l'une des revendications 1 à 7,
**caractérisé en ce que**
il est réalisé sous la forme d'un serre-câble de mise à la terre (40) et comprend un élément de fixation (42) pour la fixation sur un mât.

12. Serre-câble (40) selon la revendication 11,
**caractérisé en ce que**
l'élément de fixation (42) est réalisé sous la forme d'un pied de maintien pour une liaison en coopération de formes, en particulier à la manière d'une queue d'aronde.
